# EUROPEAN PATENT SPECIFICATION

(11) **EP 2 832 987 B1**
(45) Date of publication and mention of the grant of the patent: **06.01.2016**
(21) Application number: 13179141.0
(22) Date of filing: 02.08.2013
(51) Int. Cl.: F03B 13/18, H02K 35/02, F03D 9/00

(54) **Energy generation device and energy harvesting device comprising the same**
Energieerzeugungsvorrichtung und Energiesammlungsvorrichtung damit
Dispositif de génération d'énergie et dispositif de récupération d'énergie comprenant celui-ci

(43) Date of publication of application: 04.02.2015
(73) Proprietor: King Abdulaziz City for Science & Technology (KACST), 11442 Riyadh (SA)
(72) Inventor: Baabbad, Mazen Abdullah, 11442 Riyadh (SA); Al-Otaibi, Zaid S., 11442 Riyadh (SA)
(74) Representative: Scholz, Volker

(56) References cited:
- DE-A1- 10 241 854
- FR-A1- 2 928 423
- FR-A1- 2 985 549
- US-A1- 2009 167 033
- US-A1- 2011 173 967

## Description

The present invention relates to an energy generation device and an energy harvesting device.

There exist a lot of energy harvesting systems. They utilize only one type of motion, while the other type of motion is wasted and absorbed in the structure. For example, in wind energy and in particular the existing vertical axis wind turbines, e. g. Darrieus and Giro-mill wind turbines, only the rotational motion is used to generate electricity, while the strong vibrational motion is suppressed and passed to the structure. This causes the vertical axis wind turbines to suffer from fatigue problems.

Also, in (ocean) wave energy harvesting systems, only one type of motion is used to generate electricity, while the other type of motion is resisted by the structure. For example some types use the vertical displacement to generate electricity, while the horizontal displacement is wasted and vice versa. Document US2011/173967 A1 discloses an ocean based power generating device comprising an elongated colunm journalled in a support structure for universal movement relative thereto.

It is the aim of the present invention to provide an energy generation device that enables to convert both the rotary and the vibratory (out of axis) motions into electricity.

This aim is accomplished according to the present invention by an energy generation device comprising a fixed casing, in which a multiple-axis rotational joint, in particular a spherical joint or universal joint, is arranged and in which an aperture is arranged opposite to said joint, pendulum with a first and a second end, the first end being attached to the multiple-axis rotational joint and the second end projecting through said aperture out of said casing, a segment corresponding to the segment of the casing being arranged between the first and second end of the pendulum and at least one permanent magnet or electromagnet being arranged on said segment of said pendulum.

The dimension or size of the aperture has to be larger than the dimension or cross-section of the pendulum for enabling the pendulum to swing. Also, preferably a plurality of electrical induction coils is, preferably uniformly, distributed around the aperture in/on said segment on the inner surface of the casing. Of course, the arrangement of the electrical induction coil(s) and permanent magnet(s) or electromagnet(s) could be reversed as well.

According to a second aspect, this aim is accomplished according to an invention by an energy harvesting device comprising an energy generation device according to anyone of claims 1 to 3.

According to a particular embodiment of the energy generation device, the first end of the pendulum is the upper end and the second end of the pendulum is the lower end and the upper end of the pendulum is suspended on said joint.

Preferably, the device comprises a motion stabilization device, such as at least one magnetic bearing, associated with said joint. This is particularly advantageous in case of a universal joint or swivel joint.

According to a particular embodiment of the energy harvesting device, said device is a vertical axis wind turbine and the pendulum is the rotational axis of the wind turbine.

In particular, the casing may be stationary mounted to a pile of said wind turbine.

In an alternative embodiment, the energy harvesting device is a wave, e. g. ocean wave, energy harvesting device comprising a buoy that is arranged at the second end of said pendulum.

The invention recognizes that by providing a special electricity generating joint both the rotary and vibratory (out of axis) motions can be converted into electricity.

Further features and advantages of the invention will become clear from the accompanying claims and the following description, in which two preferred embodiments of the invention are illustrated in detail with reference to the schematic drawings, wherein
- Figure 1: shows a side view of an energy generation device according to a first special embodiment of the invention;
- Figure 2: shows a side view of the energy generation device of figure 1 in a different motion state of a pendulum belonging to said energy generation device;
- Figure 3: shows a side view partly in sectional view of the energy generation device of figure 2;
- Figure 4: shows a side view partly in sectional view of a single component of the energy generation device shown in figures 1 to 3;
- Figure 5: shows a side view partly in sectional view of a further component of the energy generation device of figures 1 to 3;
- Figure 6: shows a side view of an energy harvesting device according to a first special embodiment of the invention;
- Figure 7: shows the energy generation device of figure 6 without rotor blades;
- Figure 8: shows a side view partly in sectional view of the components shown in figure 7, but in a different motion state;
- Figure 9: shows a part of the components shown in figure 8 in a different motion state; and
- Figure 10: shows a side view of an energy harvesting device according to a second special embodiment of the invention.

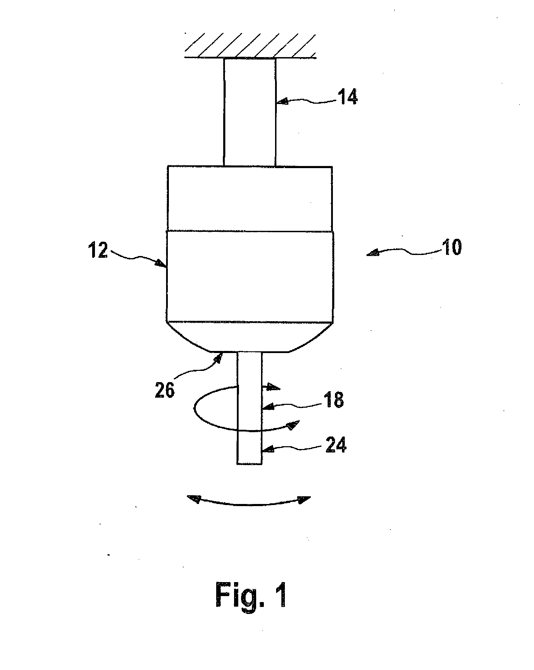

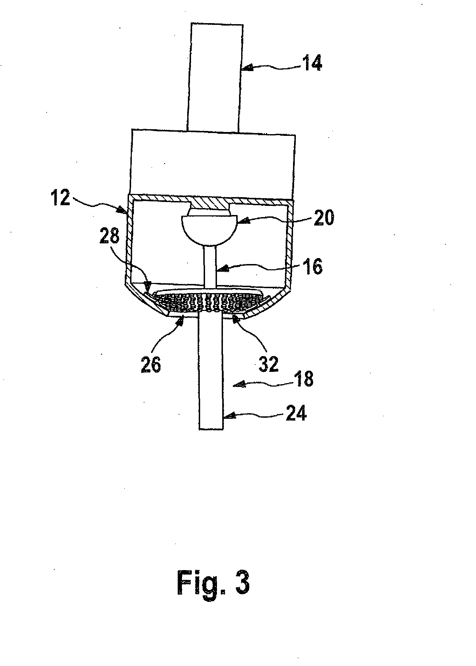

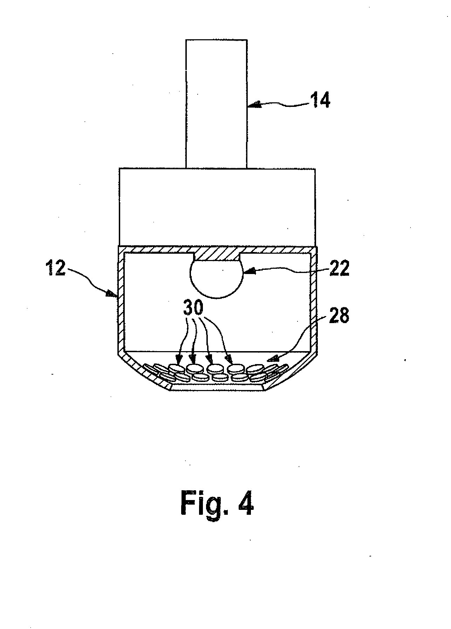

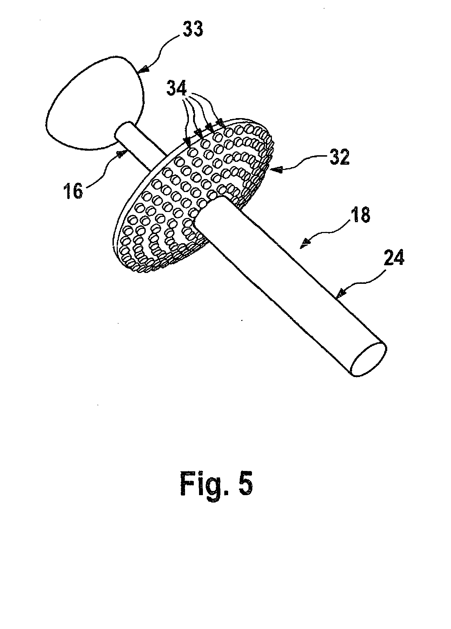

As shown in figure 1, energy generation device 10 according a special embodiment of the invention comprises a casing 12 that is fixed to a stationary part 14, an like for example a pole or boom pole. Furthermore, as shown in figures 3 and 5, the upper end 16 of a pendulum 18 is connected to a spherical joint 20 that is arranged in the casing 12. As shown in figure 4, the spherical joint head 22 is fixed to the stationary part 14.

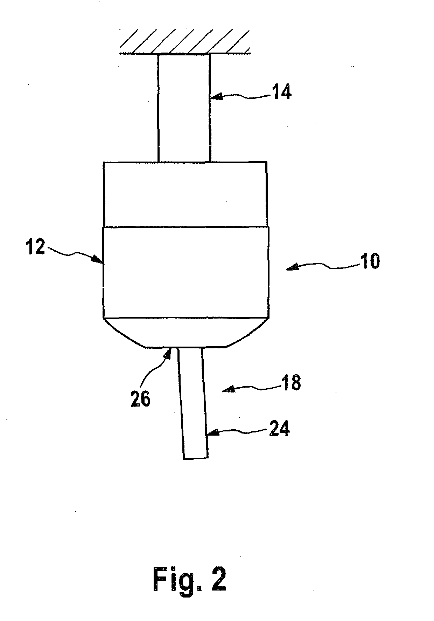

The lower end 24 of the pendulum 18 is downwardly projecting out of a circular aperture 26 opposite to the spherical joint 20 (see figures 1 to 3). The diameter of the aperture 26 is much larger than the diameter of the rod-like pendulum 18 for enabling of a swinging motion of the spherical joint 20 (see for example figure 2). In figure 1, the arrows shall demonstrate swinging motions of the spherical joint 20 in two main axes that are perpendicular to each other. However, in the case of a spherical joint, the swinging motion is not restricted to said two axes. It enables swinging motions around three main axes and six degrees of freedom.

As can be seen in figures 3 and 4, the aperture 26 is surrounded by a spherical or hemispherical segment 28 on the inner surface of the casing 12. A plurality of electrical induction coils (only some of them being labeled by reference numeral 30) is only uniformly As shown in figures 3 and 5, a segment 32 corresponding in shape to the segment 28 of the pendulum 18 is arranged between the lower 24 and upper end 16 of the pendulum 18, the upper end 16 being shown in combination with a cup 33 of the spherical joint 20. On the lower side of said segment 32 a plurality of permanent magnets (only some of them are labeled as 34) is uniformly distributed. So when a relative motion occurs between the two segments 28 and 32, electrical currents are induced in the electrical induction coils 30 by way of the changing magnetic fields. These induced currents can be collected and filtered through power electronics (not shown) to produce useful electrical energy. In the case of using a universal joint or swivel joint, some kind of motion stabilization (not shown), such as magnetic bearings, may be used.

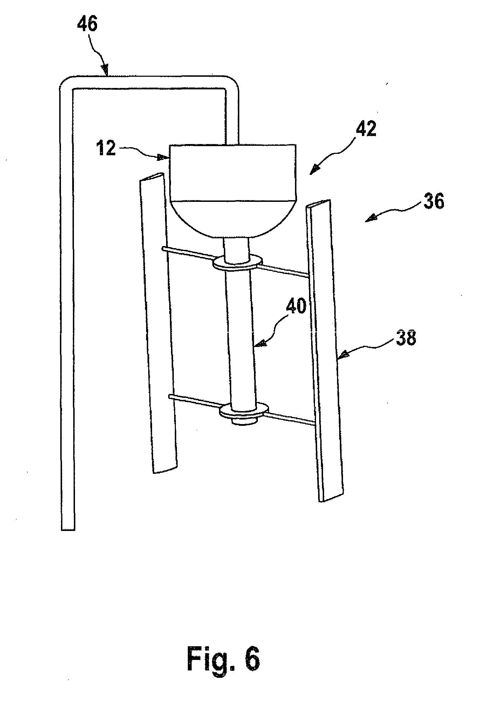

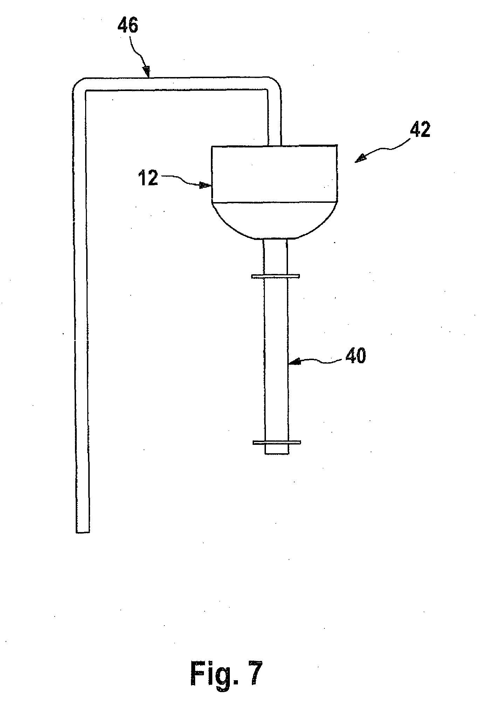

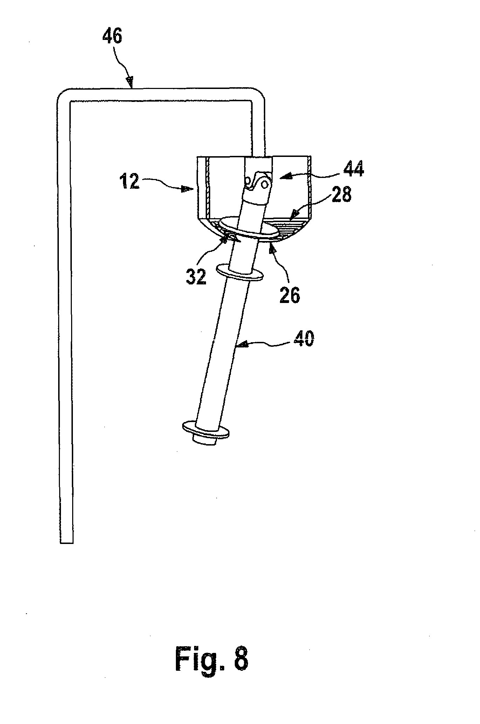

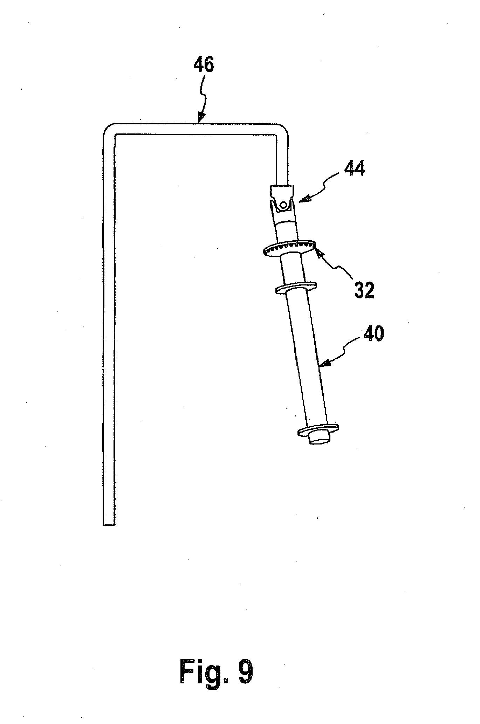

Figures 6 to 9 relate to an energy harvesting device. In this example, said device is a vertical axis wind turbine 36. Said turbine 36 comprises a H-rotor 38. Said H-rotor can rotate about a kind of vertical axis in form of a pendulum 40 being part of an energy generation device 42 that is similar to the energy generation device 10 of figures 1 to 5. Said energy generation device 42 is attached to a boom pole 46. The main difference is that in the present case the spherical joint is replaced by a universal joint 44. Said universal joint 44 is a two-axis rotational joint (see figure 8).

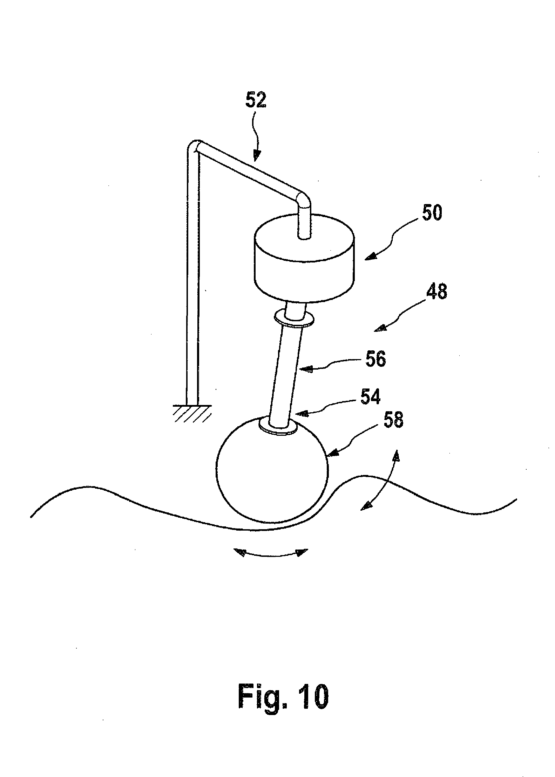

Finally, figure 10 shows an energy harvesting device. Said device is a wave energy harvesting device 48. Said wave energy harvesting device 48 uses an energy generation device 50 like for example the energy generation device 10 shown in figures 1 to 5 or the energy generation device 42 shown in figures 6 to 9.

Said energy generation device 50 is attached to a boom pole 52. At the lower end 54 of a pendulum 56 a buoy 58 is arranged and fixed thereto. The two arrows in figure 10 shall show a two-axes wave motion of water, like the ocean.

The features in the foregoing description, in the claims and/or in the accompanying drawings may, both and in any combination thereof, be material for realizing the invention in diverse forms thereof.

### Reference list

- 10: energy generation device
- 12: casing
- 14: stationary part
- 16: upper end
- 18: pendulum
- 20: spherical joint
- 22: spherical joint head
- 24: lower end
- 26: aperture
- 28: segment
- 30: electrical induction coils
- 32: segment
- 33: cup
- 34: permanent magnets
- 36: vertical axis wind turbine
- 38: H-rotor
- 40: pendulum
- 42: energy generation device
- 44: universal joint
- 46: boom pole
- 48: wave energy harvesting device
- 50: energy generation device
- 52: boom pole
- 54: lower end
- 56: pendulum
- 58: buoy

## Claims

1. Energy generation device (10; 42; 50), comprising
- a fixed casing (12), in which a multiple-axis rotational joint, in particular a spherical joint (20) or universal joint (44), is arranged and in which an aperture (26) is arranged opposite to said joint (20; 44), said aperture being surrounded by a, preferably spherical, segment (28) on the inner surface of the casing (12) and at least one electrical induction coil (30) being arranged in or on said segment, and
- a pendulum (18; 40; 56) with a first and a second end, the first end being attached to the multiple-axis rotational joint and the second end projecting through said aperture out of said casing, a segment corresponding to the segment of the casing being arranged between the first and seconds ends of the pendulum and at least one permanent magnet or electromagnet being arranged on said segment of said pendulum.

2. Device (10; 50) according to claim 1, wherein the first end of the pendulum (18) is the upper end (16) and the second end of the pendulum is the lower end (24; 54) and the upper end of the pendulum is suspended on said joint.

3. Device (10; 42; 50) according to claim 1 or 2, further comprising a motion stabilization device, such as at least one magnetic bearing, associated with said joint.

4. Energy harvesting device, comprising an energy generation device according to any one of claims 1 to 3.

5. Device according to claim 4, wherein said device is a vertical axis wind turbine (36) and the pendulum (40) is the rotational axis of the wind turbine.

6. Device according to claim 5, wherein the casing is stationary mounted to a pile of said wind turbine.

7. Device according to claim 4, wherein said device is a wave energy harvesting device (48) comprising a buoy (58) that is arranged at the second end of said pendulum (56).

## Patentansprüche

1. Energieerzeugungsvorrichtung (10; 42; 50), die Folgendes umfasst:
- ein feststehendes Gehäuse (12), in dem ein mehrachsiges Drehgelenk, insbesondere ein Kugelgelenk (20) oder ein Universalgelenk (44) angeordnet ist und in dem eine Öffnung (26) gegenüber dem Gelenk (20; 44) angeordnet ist, wobei die Öffnung von einem vorzugsweise kugelförmigen Segment (28) an der inneren Oberfläche des Gehäuses (12) umgeben ist und wenigstens eine elektrische Induktionsspule (30) in oder an diesem Segment angeordnet ist, und
- ein Pendel (18; 40; 56) mit einem ersten und einem zweiten Ende, wobei das erste Ende an dem mehrachsigen Drehgelenk befestigt ist und das zweite Ende durch die Öffnung aus dem Gehäuse vorsteht, wobei ein Segment, das dem Segment des Gehäuses entspricht, zwischen dem ersten und dem zweiten Ende des Pendels angeordnet ist und wenigstens ein Permanentmagnet oder Elektromagnet bei dem Segment des Pendels angeordnet ist.

2. Vorrichtung (10; 50) nach Anspruch 1, wobei das erste Ende des Pendels (18) das obere Ende (16) ist und das zweite Ende des Pendels das untere Ende (24; 54) ist und wobei das obere Ende des Pendels an dem Gelenk ausgehängt ist.

3. Vorrichtung (10; 42; 50) nach Anspruch 1 oder 2, die ferner eine Bewegungsstabilisierungsvorrichtung wie etwa wenigstens ein Magnetlager, das dem Gelenk zugeordnet ist, umfasst.

4. Energieerntevorrichtung, die eine Energieerzeugungsvorrichtung nach einem der Ansprüche 1 bis 3 umfasst.

5. Vorrichtung nach Anspruch 4, wobei die Vorrichtung eine Windturbine (36) mit vertikaler Achse ist und das Pendel (40) die Drehachse der Windturbine ist.

6. Vorrichtung nach Anspruch 5, wobei das Gehäuse fest an einem Pfeiler der Windturbine angebracht ist.

7. Vorrichtung nach Anspruch 4, wobei die Vorrichtung eine Wellenenergie-Erntevorrichtung (48) ist, die eine Boje (58) umfasst, die an dem zweiten Ende des Pendels (56) angeordnet ist.

## Revendications

1. Dispositif de génération d'énergie (10 ; 42 ; 50), comprenant :
un carter (12) fixe, dans lequel un joint de rotation à axe multiple, notamment un joint sphérique (20) ou un joint universel (44), est agencé et dans lequel une ouverture (26) est agencée à l'opposé dudit joint (20 ; 44), ladite ouverture étant entourée par un segment (28), de préférence sphérique, sur la surface intérieure du carter (12) et au moins une bobine à induction électrique (30) étant agencée dans ou sur ledit segment ; et
un pendule (18 ; 40 ; 56) avec une première et une seconde extrémité, la première extrémité étant fixée au joint de rotation à axe multiple et la seconde extrémité saillant à travers ladite ouverture hors dudit carter, un segment correspondant au segment du carter étant agencé entre les première et seconde extrémités du pendule et au moins un aimant permanent ou électroaimant étant agencé sur ledit segment dudit pendule.

2. Dispositif (10 ; 50) selon la revendication 1, dans lequel la première extrémité du pendule (18) est l'extrémité supérieure (16) et la seconde extrémité du pendule est l'extrémité inférieure (24 ; 54) et l'extrémité supérieure du pendule est suspendue sur ledit joint.

3. Dispositif (10 ; 42 ; 50) selon la revendication 1 ou 2, comprenant en outre un dispositif de stabilisation de mouvement, tel qu'au moins un palier aimanté associé audit joint.

4. Dispositif de collecte d'énergie, comprenant un dispositif de génération d'énergie selon l'une quelconque des revendications 1 à 3.

5. Dispositif selon la revendication 4, dans lequel ledit dispositif est une éolienne (36) à axe vertical et le pendule (40) est l'axe de rotation de l'éolienne.

6. Dispositif selon la revendication 5, dans lequel le carter est fixé de façon stationnaire à une pile de ladite éolienne.

7. Dispositif selon la revendication 4, dans lequel ledit dispositif est un dispositif de collecte d'énergie des vagues (48) comprenant une bouée (58) agencée au niveau de la seconde extrémité dudit pendule (56) .
